# EUROPÄISCHE PATENTANMELDUNG

(11) **EP 3 309 416 A1**
(43) Veröffentlichungstag der Anmeldung: **18.04.2018**
(21) Anmeldenummer: 17195741.8
(22) Anmeldetag: 10.10.2017
(51) Int. Cl.: F16B 43/00, F16B 21/08, F16B 5/06

(54) **BEFESTIGUNGSMITTEL ZUR RASTENDEN BEFESTIGUNG IN EINER AUSLASSUNG SOWIE BEFESTIGUNGSSYSTEM ENTHALTEND DIESES BEFESTIGUNGSMITTEL**

(30) Priorität: 11.10.2016 DE 202016006260 U
(71) Anmelder: Haller Kunststofftechnik GmbH, 63110 Rodgau (DE)
(72) Erfinder: Löhr, Ralph, 63110 Rodgau (DE); Haller, Otto, 63110 Rodgau (DE)
(74) Vertreter: Metten, Karl-Heinz

(57) **Zusammenfassung**

Die Erfindung betrifft ein Befestigungsmittel (1) zur rastenden Befestigung in einer Auslassung, umfassend ein Anschlagelement (14) und ein Einführ- und Zentrierelement (16) umfassend ein Kernelement (10) mit einem Einführende (12), das dem Anschlagelement (14) gegenüberliegt, wobei das Kernelement (10) dem Einführende (12) gegenüberliegend mit dem Anschlagelement (14) verbunden ist, mindestens drei Rastelemente (2), die an dem Kernelement (10) vorliegen und die sich vom Kernelement (10) weg erstrecken und die beabstandet von dem Anschlagelement (14) enden, und mindestens drei Zentrierelemente (4), die eine maximale radiale Ausdehnung haben, die geringer ist als die maximale radiale Ausdehnung der Rastelemente (2). Ferner betrifft die Erfindung ein Befestigungssystem (100), enthaltend ein erfindungsgemäßes Befestigungsmittel (1) und mindestens eine Dichtungsscheibe (24) mit einer Auslassung (25), eingerichtet und ausgelegt, um das Einführ- und Zentrierelement (16) aufzunehmen, und/oder mindestens ein flächiges Substrat (30) mit einer Auslassung (28), eingerichtet und ausgelegt, um das Einführ- und Zentrierelement (16) aufzunehmen.

## Beschreibung

Die vorliegende Erfindung betrifft ein Befestigungsmittel zur rastenden Befestigung in einer Auslassung sowie ein Befestigungssystem enthaltend dieses Befestigungsmittel.

Clipverbindungssysteme werden für velfältigste Anwendungen in sehr vielen Produktfeldern genutzt, um Komponenten dauerhaft oder temporär miteinander zu Verbinden. Demgemäß werden Clipvorrichtungen auch häufig als Verschlusssysteme eingesetzt. Die Einsatzbreite von Clipverbindungen geht nicht zuletzt auf die Verfügbarkeit geeigneter Kunststoffmaterialen zurück, die sehr robust, temperaturbeständig und auch bei Bewegungsbeanspruchung sehr widerstandsfähig sind. Die Tendenz, Clipverbindungen möglichst vielfältig einzusetzen, ist ungebrochen. Gleichwohl lassen bestehende Clipverbindungen noch stets Wünsche offen, beispielsweise hinsichtlich Anbringungssicherheit und Anbringungsgenauigkeit.

Der vorliegenden Erfindung lag daher die Aufgabe zu Grunde, Clipverbindungen zur Verfügung zu stellen, die nicht mehr mit den Nachteilen des Stands der Technik behaftet sind und die insbesondere eine zuverlässige und reproduzierbare Anbringung gewährleisten, so dass beispielsweise ein Nachjustieren nicht mehr erforderlich ist.

Demgemäß wurde ein Befestigungsmittel, insbesondere Clip, zur rastenden Befestigung in einer Auslassung, insbesondere Loch in einem z.B. flächigen Substrat, beispielsweise Stanzloch, gefunden, umfassend ein Anschlagelement, insbesondere eine Anschlagplatte, mit einer Grundfläche und ein Einführ- und Zentrierelement mit einer Außenfläche umfassend ein Kernelement mit einem Einführende, das dem Anschlagelement gegenüberliegt, wobei das Kernelement dem Einführende gegenüberliegend mit dem Anschlagelement verbunden ist oder einstückig in diese übergeht, mindestens drei Rastelemente, insbesondere Rastflügel, die an dem Kernelement vorliegen und die sich zumindest abschnittsweise vom Kernelement weg erstrecken und die beabstandet, d.h. in einem Abstand von dem Anschlagelement enden, und mindestens drei Zentrierelemente, die eine maximale radiale Ausdehnung haben, die geringer ist als die maximale radiale Ausdehnung des Rastelements. Bei Verwendung einer Anschlagplatte als Anschlagelement sind die Grundfläche dieses Anschlagelements und die Anschlagfläche der Anschlagplatte regelmäßig deckungsgleich bzw. stimmen überein.

Das erfindungsgemäße Befestigungsmittel stellt bevorzugt einen Clip, insbesondere Kunststoffclip, dar oder umfasst einen solchen.

Solche erfindungsgemäßen Befestigungsmittel haben sich als besonders zweckmäßig erwiesen, bei denen das Einführ- und Zentrierelement vier Rastflügel aufweist, die sich von dem Kernelement weg erstrecken und wobei vorzugsweise der Winkel zwischen benachbarten Rastflügeln etwa 90° beträgt.

Auch sind solche Ausgestaltungen der erfindungsgemäßen Befestigungsmittel besonders vorteilhaft, bei denen die Rastelemente, insbesondere Rastflügel, einstückig mit dem Kernelement verbunden sind oder vorliegen. Die Rastelemente, insbesondere Rastflügel, sind regelmäßig in einem Abschnitt näher zum Einführende des Kernelements bzw. benachbart zu dem Einführende mit dem Kernelement, insbesondere einstückig, verbunden und sind in einem Abschnitt jenseits dieses Verbindungsabschnitts nicht mit dem Kernelement verbunden, sondern liegen beabstandet von dem Kernelement vor. Dieser Abschnitt der Rastelemente, insbesondere Rastflügel, der nicht mit dem Kernelement verbunden ist, ist im Allgemeinen federelastisch ausgestaltet, um eine Rastfunktion ausüben zu können. In dem Grundzustand des Rastelements, in dem keine äußere Kraft auf diesen federelastischen Abschnitt der Rastelemente, insbesondere Rastflügel, einwirkt, verfügen diese Rastelemente, insbesondere Rastflügel, über eine maximale radiale Ausdehnung, die größer ist, als die einer Auslassung, beispielsweise eines Stanzloches, in das das erfindungsgemäße Befestigungsmittel rastend eingeführt werden soll. Die maximale radiale Ausdehnung der Rastelemente wird demgemäß regelmäßig im Grundzustand ermittelt.

Das Kernelement des erfindungsgemäßen Befestigungsmittels hat nicht notwendigerweise ein separates Bauteil zu sein. Vielmehr kann es sich bei dem Kernelement auch um denjenigen Bestandteil des Befestigungsmittels handeln, bei dem die Rastelemente und die Zentrierelemente ansetzen bzw. zusammenlaufen. Bei der vorangehend geschilderten Art der Gestaltung kann häufig keine eindeutige Grenze für das Kernelement bestimmt werden, es sei denn, man rechnet all dasjenige dem Kernelement zu, was sich nicht eindeutig dem Zentrierelement, insbesondere der Zentrierrippe, und dem Rastelement, insbesondere dem Rastflügel, zuordnen lässt.

Das Einführ- und Zentrierelement weist vorzugsweise vier Zentrierelemente auf, die sich von dem Kernelement weg erstrecken. Vorzugsweise beträgt der Winkel zwischen benachbarten Zentrierelementen etwa 90°.

Die Zentrierelemente liegen bevorzugt in Form von Zentrierrippen vor oder umfassen solche Zentrierrippen.

Das erfindungsgemäße Befestigungsmittel ist in einer besonders zweckmäßigen Ausgestaltung vollständig oder teilweise aus einem Kunststoffmaterial gefertigt. Dabei können besonders geeignete Kunststoffmaterialien ausgewählt sein aus der Gruppe bestehend aus Polyoxymethylen (POM), Polyetherketonen (PEK), Polyetheretherketonen (PEEK), Polyamiden, Polyketonen und deren Mischungen. Bevorzugt wird auf Polyoxymethylen (POM) zurückgegriffen.

Die der Erfindung zu Grunde liegende Aufgabe lässt sich besonders zuverlässig und gut mit solchen erfindungsgemäßen Befestigungsmitteln lösen, bei denen die Zentrierelemente und die Rastelemente in alternierender Abfolge an dem Kernelement angeordnet sind bzw. vorliegen, insbesondere in etwa gleichen Winkelabständen.

Dabei kann in einer bevorzugten Ausgestaltung vorgesehen sein, dass die maximale radiale Ausdehnung der Zentrierelemente nicht über den Umfangsrand des Anschlagelements, insbesondere der Anschlagplatte, hinausragt, und insbesondere beabstandet von diesem Umfangsrand endet. Mit radialer Ausdehnung im Sinne der vorliegenden Erfindung ist die Ausdehnung weg von dem Kernelement, d.h. senkrecht von dem Zentrum bzw. der Zentralachse des Kernelements gemeint. Diese radiale Ausdehnung ist vorzugsweise im Wesentlichen parallel zur Anschlagsfläche bzw. Grundfläche des Anschlagelement bzw. der Anschlagplatte. Unter einer Grundfläche des Anschlagelements soll im Sinne der vorliegenden Erfindung diejenige ebene Fläche mit dem größten Flächeninhalt verstanden werden, die durch das Anschlagelement gelegt werden kann und die vorzugsweise im Wesentlichen senkrecht zum Kernelement bzw. zur Normalen des Kernelement ausgerichtet ist.

Die Zentrierelemente erstrecken sich vorzugsweise entlang des Kernelements bis zum Anschlagelement, insbesondere bis zur Anschlagplatte. Besonders bevorzugt sind die Zentrierelemente einstückig mit dem Anschlagelement verbunden bzw. gehen einstückig in dieses über.

Eine besonders zuverlässige, sichere und passgenaue Fixierung bzw. Positionierung des erfindungsgemäßen Befestigungsmittels in einer Auslassung, beispielsweise einem Stanzloch, gelingt dann, wenn die maximale radiale Ausdehnung der Zentrierelemente in Bezug auf das Kernelement, insbesondere dem Zentrum des Kernelements, an dem oder, insbesondere geringfügig, beabstandet, z.B. benachbart von dem Anschlagelement oder der Anschlagplatte, insbesondere an dem bzw. im Übergang zu dem Anschlagelement, vorliegt.

In einer zweckmäßigen Ausgestaltung des erfindungsgemäßen Befestigungsmittels kann vorgesehen sein, dass das Anschlagelement eine im Wesentlichen kreisförmige Anschlagfläche aufweist und/oder dass das Kernelement des Einführ- und Zentrierelements im Zentrum des Anschlagelements, insbesondere der kreisförmigen Anschlagfläche, vorliegt.

Vorzugsweise weisen mindestens zwei, vorzugsweise sämtliche, Rastelemente, insbesondere Rastflügel, eine im Wesentlichen gleiche Form und/oder eine im Wesentlichen gleiche Ausdehnung auf. Zusätzlich oder alternativ, insbesondere zusätzlich, ist es bevorzugt, dass mindestens zwei, vorzugsweise sämtliche, Zentrierelemente, insbesondere Zentrierrippen, eine im Wesentlichen gleiche Form und/oder eine Wesentlichen gleiche Ausdehnung aufweisen.

Insbesondere mit solchen erfindungsgemäßen Befestigungsmitteln gelingt ein sicheres, zuverlässiges und einfaches Positionieren von Bauteilen bzw. Bauteilkomponenten, und zwar ohne dass ein Nachjustieren erforderlich ist, bei denen in einem ersten Abstand von dem Einführende die radiale Ausdehnung der Zentrierelemente größer als die radiale Ausdehnung der Rastelemente und bei denen in einem zweiten Abstand vom Einführende, der größer ist als der erste Abstand, die radiale Ausdehnung der Rastelemente größer ist als die radiale Ausdehnung der Zentrierelemente. In diesem zweiten Abstand ragen die Rastelemente vorzugsweise auch über die Ausdehnung bzw. den Rand des Anschlagelements hinaus.

In einer zweckmäßigen Weiterentwicklung umfassen die erfindungsgemäßen Befestigungsmittel ein Aufnahmeelement für Bauteile oder Bauteilkomponenten mit einer Grundfläche, befestigt an oder einstückig ausgeführt mit dem Anschlagelement, das auf der Seite des Anschlagelements vorliegt, die dem Kernelement gegenüberliegt. Durch das Vorsehen eines Aufnahmeelements erhält man eine große Variabilität bei der Anbringung von Bauteilen und Bauteilkomponenten, beispielsweise von Fahrzeugleuchten oder Bestandteilen hiervon. Unter einer Grundfläche des Aufnahmeelements soll im Sinne der vorliegenden Erfindung diejenige ebene Fläche mit dem größten Flächeninhalt verstanden werden, die durch das Aufnahmeelement gelegt werden kann und die vorzugsweise im Wesentlichen senkrecht zum Kernelement bzw. zur Normalen des Kernelement ausgerichtet ist.

Besonders bevorzugt sind solche Befestigungsmittel, bei denen die Zentrierelemente, die Rastelemente, das Kernelement, das Anschlagelement und das Aufnahmeelement ein einstückiges, insbesondere spritzgegossenes, Bauteil darstellen.

Für viele Anwendungen hat es sich als zweckmäßig erwiesen, auf solche erfindungsgemäßen Befestigungsmittel zurückzugreifen, bei denen das Aufnahmeelement über eine Grundfläche verfügt, die kleiner oder gleich der Grundfläche des Anschlagelements ist. Selbstverständlich umfassen erfindungsgemäße Befestigungsmittel auch solche Ausführungsformen, bei denen die Grundfläche des Aufnahmeelements größer ist als die Grundfläche des Anschlagelements.

Das Aufnahmeelement ist in vielen praktikablen Ausgestaltungen über ein, insbesondere im Zentrum von Aufnahmeelement und/oder Anschlagelement angeordnetes, Verbindungselement mit dem Anschlagelement verbunden.

Demgemäß kann vorgesehen sein, dass das Aufnahmeelement beabstandet von dem Anschlagelement vorliegt und/oder dass die Grundfläche des Aufnahmeelements und die Grundfläche des Anschlagelements im Wesentlichen parallel zueinander ausgerichtet sind.

In einer besonders bevorzugten Ausgestaltung erfindungsgemäßer Befestigungsmittel ist vorgesehen, dass die Rastelemente eine Außenfläche aufweisen, die sich vom Einführende oder beabstandet vom Einführende aus in Richtung des Anschlagelements in einem spitzen Winkel vom Kernelement weg erstreckt. Die Außenfläche der Rastelemente liegt demgemäß vorzugsweise auf einer im Wesentlichen kegelförmigen Fläche vor bzw. bilden Bestandteile einer solchen Fläche.

Zwecks Erfüllung einer hinreichenden Einrastfunktion hat es sich vielfach als zweckmäßig erwiesen, dass die Rastelemente in der Weise beabstandet von dem Anschlagelement enden, dass zwischen den Rastelementen und dem Anschlagelement mindestens Dichtungselement, insbesondere eine Dichtungsscheibe, und/oder mindestens ein flächiges Substrat, insbesondere eine Blechplatte, anordenbar sind. Hierbei kann vorzugsweise vorgesehen sein, dass die Rastelemente benachbart zum Anschlagelement über eine Ausdehnung verfügen, die über das Anschlagelement, insbesondere die Grundfläche des Anschlagelements, hinausragt. Bevorzugt liegen zwischen den Rastelementen, insbesondere den Rastnasen der Rastflügel, und dem Anschlagelement, insbesondere der Anschlagplatte, mindestens eine Dichtungsscheibe und mindestens ein flächiges Substrat, beispielsweise eine Blechplatte, vor, wobei das Dichtungselement, bevorzugt die Dichtungsscheibe, bevorzugt zwischen Anschlagelement und dem flächigen Substrat vorliegt, d.h. die Rastelemente, insbesondere die Rastnasen, liegen bevorzugt an dem flächigen Substrat an.

Demgemäß sind die erfindungsgemäßen Befestigungsmittel zweckmäßigerweise eingerichtet und ausgelegt, um eine rastende Befestigung mit einer eckigen, insbesondere quadratischen, oder mit einer im Wesentlichen kreisrunden Auslassung, beispielsweise einem Stanzloch, einzugehen.

Das Einführende der erfindungsgemäßen Befestigungsmittel ist vorzugsweise abgerundet gestaltet und weist insbesondere eine kuppelförmige Geometrie auf.

Ein besonders zuverlässiges Positionieren gelingt auch insbesondere mit solchen erfindungsgemäßen Befestigungsmitteln, bei denen die Zentrierelemente zueinander im Wesentlichen symmetrisch angeordnet sind und/oder bei denen die Rastelemente zueinander im Wesentlichen symmetrisch angeordnet sind.

Die Rastelemente der erfindungsgemäßen Befestigungsmittel sind regelmäßig federelastisch ausgestaltet. Auch sind diese Rastelemente, insbesondere bei federelastischer Ausgestaltung, vorzugsweise in einem Abschnitt benachbart zum Anschlagelement nicht mit dem Kernelement verbunden, insbesondere von diesem beabstandet.

Des weiteren haben sich derartige erfindungsgemäße Befestigungsmittel als besonders zweckmäßig erwiesen, bei denen die Zentrierelemente sich, insbesondere im Wesentlichen gleichförmig, in Bezug auf ihre radiale Ausdehnung in Richtung des Einführendes verjüngen und/oder bei denen die Zentrierelemente in einem Abschnitt benachbart zum Anschlagelement über eine im wesentlichen gleichbleibende radiale Ausdehnung verfügen. Letztgenannte Alternative ist vielfach bevorzugt.

Die der Erfindung zu Grunde liegende Aufgabe wird des Weiteren gelöst durch ein Befestigungssystem, enthaltend ein erfindungsgemäßes Befestigungsmittel und mindestens eine Dichtungsscheibe mit einer Auslassung, beispielsweise einem runden oder eckigen Loch, eingerichtet und ausgelegt, um das Einführ- und Zentrierelement aufzunehmen, und/oder mindestens ein flächiges Substrat, insbesondere Blechplatte, mit einer Auslassung, beispielsweise einem runden oder eckigen Loch, eingerichtet und ausgelegt, um das Einführ- und Zentrierelement aufzunehmen.

Bei dem erfindungsgemäßen Befestigungssystem ist in einer zweckmäßigen Ausgestaltung die mindestens eine Dichtungsscheibe und/oder das flächige Substrat zwischen dem Anschlagelement und dem mindestens einen flächigen Substrat angeordnet. Liegen die Dichtungsscheibe und/oder das flächige Substrat nicht in der vorangehend dargestellten Form vor, sondern separat neben dem erfindungsgemäßen Befestigungsmittel, liegt ein derartiges erfindungsgemäßes Befestigungssystem als sogenanntes Kit-of-Parts vor bzw. stellt einen solchen dar.

Solche erfindungsgemäßen Befestigungssysteme sind bevorzugt, bei denen die Auslassung bzw. das Loch der Dichtungsscheibe eine eckige oder eine im Wesentlichen kreisrunde, insbesondere eckige, Geometrie aufweist.

Hierbei kann bevorzugt vorgesehen sein, dass die Auslassung bzw. das Loch des flächigen Substrats eine eckige oder eine im Wesentlichen kreisrunde, insbesondere eine im Wesentlichen kreisrunde, Geometrie aufweist.

Unter den erfindungsgemäßen Befestigungssystemen haben sich solche als besonders geeignet erwiesen, bei denen die Zentrierelemente des Befestigungsmittels, insbesondere in dem Abschnitt benachbart zu dem Anschlagelement, eine Ausdehnung aufweisen, die im Wesentlichen der Ausdehnung der Auslassung des flächigen Substrats entspricht oder in einer Weise kleiner ist als die Ausdehnung der Auslassung des flächigen Substrats, dass das Einführ- und Zentrierelement lateral im Wesentlichen bewegungsinvariant vorliegt. Darüber hinaus sind auch solche Ausführungsformen des erfindungsgemäßen Befestigungssystems bevorzugt, bei denen die Zentrierelemente des Befestigungsmittels in dem Abschnitt benachbart zu dem Anschlagelement eine radiale Ausdehnung aufweisen, die größer ist als die Ausdehnung der Auslassung des flächigen Substrats, insbesondere geringfügig größer als die Ausdehnung der Auslassung dieses flächigen Substrats. Dies ist insbesondere dann bevorzugt, wenn das Material des flächigen Substrats über eine größere Härte verfügt als das Material der Zentrierelemente. Auf diese Weise kann das Befestigungsmittel in die Auslassung des Flächensubstrats hineingedrückt bzw. -gepresst werden. Auf diese Weise entsteht eine noch stärkere Verbindung von Befestigungsmittel und flächigem Substrat nach dem Einrastvorgang. Bei den vorangehend dargestellten Ausführungsformen des erfindungsgemäßen Befestigungssystems ist mit der Ausdehnung der Zentrierelemente nicht die Ausdehnung eines einzelnen Zentrierelements gemeint, sondern die Ausdehnung der Gesamtheit der Zentrierelemente, welche in Bezug gesetzt wird zur Ausdehnung der Auslassung des flächigen Substrats. Demgemäß ist abzustellen auf die Ausdehnung der mindestens drei Zentrierelemente des erfindungsgemäßen Befestigungsmittels, welche in der vorangehend dargestellten Weise abgestimmt werden kann auf die Ausdehnung der Auslassung eines flächigen Substrats.

Dabei kann zweckmäßigerweise vorgesehen sein, dass die Außenflächen der Zentrierelemente im Wesentlichen auf einem Kreisumfang angeordnet sind, dessen Durchmesser im Wesentlichen dem Durchmesser der kreisförmigen Auslassung des flächigen Substrats entspricht oder der in einer Weise, insbesondere geringfügig kleiner oder größer ist als der Durchmesser der kreisförmigen Auslassung des flächigen Substrats, dass das Einführ- und Zentrierelement lateral im Wesentlichen bewegungsinvariant vorliegt. Die Außenflächen der Zentrierelemente sind diejenigen Flächen, die von dem Kernelement wegweisen und die regelmäßig in Berührungskontakt zu dem Rand der Auslassung treten können.

Eine besonders sichere und passgenaue sowie nachjustierfreie Ausführungsform des erfindungsgemäßen Befestigungssystems gelingt auch dadurch, dass mindestens ein, insbesondere sämtliche Zentrierelemente jeweils in Richtung einer Ecke der Auslassung der Dichtungsscheibe ausgerichtet sind.

Bei dem erfindungsgemäßen Befestigungssystem stellt das flächige Substrat häufig ein Karosserieblech oder einen Bestandteil hiervon dar.

Das Aufnahmeelement des Befestigungsmittels des erfindungsgemäßen Befestigungssystems kann zum Beispiel als Aufnahmeelement für Leuchten, insbesondere Fahrzeugleuchten, oder Kabelsätze eingesetzt werden.

Mit den erfindungsgemäßen Befestigungsmitteln sowie mit den erfindungsgemäßen Befestigungssystemen gelingt regelmäßig eine einwandfreie rastende Befestigung von Bauteilen an z.B. Karosserieblechen, ohne dass es einer Neupositionierung oder Nachjustierung bedarf.

Weitere Merkmale und Vorteile der Erfindung ergeben sich aus der nachfolgenden Beschreibung, in der Ausführungsbeispiele der Erfindung anhand von schematischen Zeichnungen beispielhaft erläutert werden, ohne dadurch die Erfindung zu beschränken. Dabei zeigen
- Figur 1: eine schematische Darstellung einer Ausführungsform eines erfindungsgemäßen Befestigungsmittels,
- Figur 2: eine erste Ausführungsform eines erfindungsgemäßen Befestigungssystems,
- Figur 3: eine weitere Ausführungsform eines erfindungsgemäßen Befestigungssystems,
- Figur 4: die um 180° gedrehte Ausführungsform des Befestigungssystems gemäß Figur 3,
- Figur 5: die Ansicht der Ausführungsform gemäß Figur 3 frontal von unten,
- Figur 6: die Darstellung der Komponenten einer weiteren Ausführungsform des Befestigungssystems,
- Figur 7: die teilmontierte Ausführungsform des Befestigungssystems gemäß Figur 6 und
- Figur 8: die komplett montierte Ausführungsform des Befestigungssystems gemäß Figur 6.

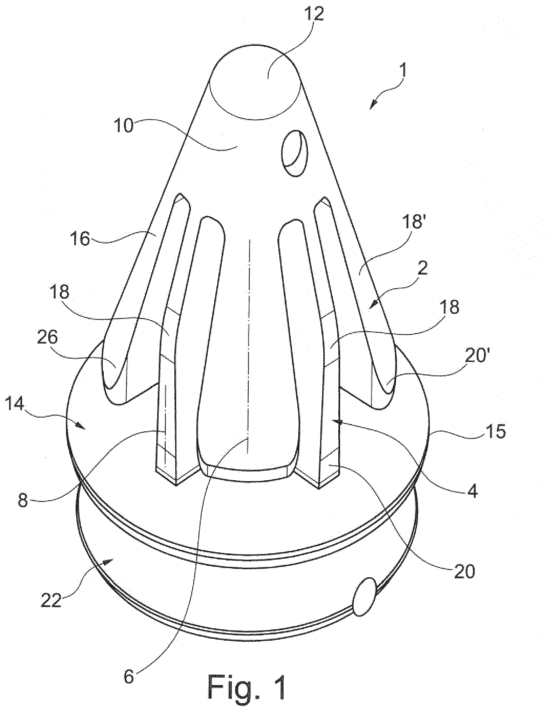

Figur 1 entnimmt man ein erfindungsgemäßes Befestigungsmittel 1 enthaltend vier Rastflügel 2 und vier Zentrierrippen 4. Die Rastflügel 2 und Zentrierrippen 4 sind alternierend angeordnet. Zwischen benachbarten Zentrierrippen 4 bzw. zwischen benachbarten Rastflügeln 2 wird ein Winkel von etwa 90° eingeschlossen, jeweils bezogen auf die Mittellinie 6 bzw. 8 dieser Bauteile. Die Rastflügel 2 wie auch die Zentrierrippen 4 gehen in ein zum größten Teil innenliegendes (und daher nicht abgebildetes) Kernelement 10 über. Dieser Kernelement 10 verfügt über ein Einführende 12, das dem Anschlagelement 14, das in Figur 1 in Form einer Anschlagplatte vorliegt, gegenüber liegt. Das Zentrum des Kernelements 10 steht in der dargestellten Ausführungsform im Wesentlichen senkrecht auf der Grundfläche der Anschlagplatte 14. In der dargestellten Ausführungsform bilden die Rastflügel 2 und die Zentrierrippen 4 das Einführ- und Zentrierelement 16 aus. Die Zentrierrippen 4 gehen in der dargestellten Ausführungsform in die Anschlagplatte 14 über (alternativ können sie z.B. an dieser anliegen). Die radiale Ausdehnung der Zentrierrippen 4 ist dabei in der dargestellten Ausführungsform derart, dass sie nicht über den Umfangsrand der Anschlagplatte 14 herausragt. Vielmehr endet die radiale Ausdehnung der Zentrierrippen 4 beabstandet von dem umlaufenden Rand 15 der Anschlagplatte 14. Während die Zentrierrippen 4 in einem Abstand näher zu dem Einführende 12 eine radiale Ausdehnung aufweisen, die über die radiale Ausdehnung der Rastflügel 2 in diesem Abstand von dem Einführende 12 hinausgeht, beispielsweise in den in Figur 1 wiedergegebenen Abschnitten 18 und 18', verfügen die Rastflügel 2 in einem Abschnitt 20', der weiter beabstandet von dem Einführende 12 als der Abschnitt 18 ist, über eine radiale Ausdehnung, die größer ist als die radiale Ausdehnung der Zentrierrippen 4 in dem korrespondierenden Abschnitt 20. Die Ausführungsform des Befestigungsmittels 1 gemäß Figur 1 verfügt ferner über ein Aufnahmeelement 22, das in zentraler Position (nicht gezeigt) mit dem Anschlagelement 14 verbunden ist, und zwar auf derjenigen Seite, die dem Einführ- und Zentrierelement 16 gegenüberliegt.

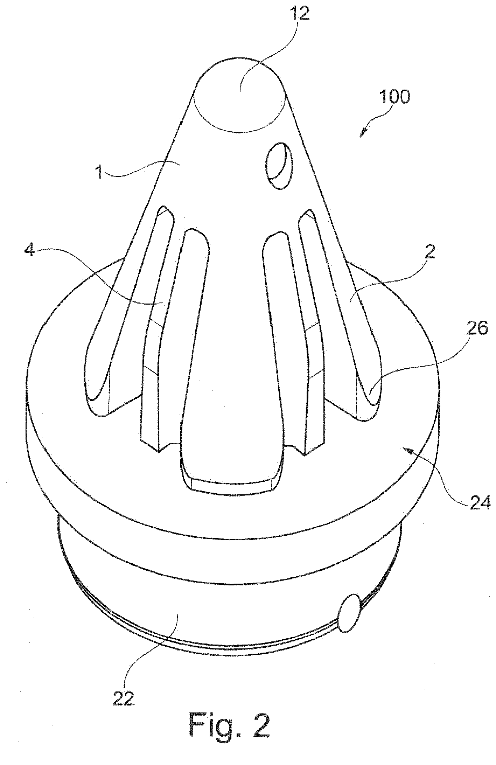

Figur 2 zeigt eine erste Ausführungsform eines erfindungsgemäßen Befestigungssystems 100, das auf dem Befestigungsmittel 1 gemäß Figur 1 basiert und das zusätzlich mit einer Dichtungsscheibe 24 ausgestattet ist. Die Dichtungsscheibe 24 verfügt über eine Dicke, die es ermöglicht, dass die Dichtungsscheibe, wenn auf der Anschlagplatte 14 (nicht abgebildet, da vollständig durch die Dichtungsscheibe überdeckt) vorliegend, unter die beabstandet von der Anschlagplatte 14 vorliegenden Rastnasen 26 der Rastflügel 2 passt.

Die Rastflügel 2 enden beabstandet von der Anschlagplatte 14 und stellen damit Raum für flächige Substrate und/oder Dichtungsscheibe zur Verfügung, die über entsprechend geformte Auslassungen rastend befestigt werden können.

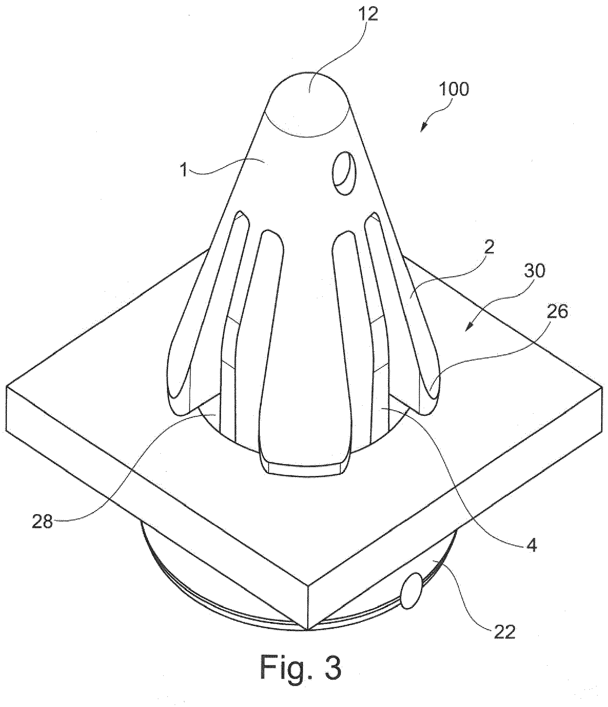

Figur 3 zeigt eine weitere Ausführungsform eines erfindungsgemäßen Befestigungssystems 100. Im Unterschied zu der Ausführungsform gemäß Figur 2 ist bei der Ausführungsform gemäß Figur 3 an Stelle der Dichtungsscheibe das erfindungsgemäße Befestigungsmittel 1 mit seinem Einführende 12 in eine kreisrunde Auslassung 28 eines flächigen Substrats, beispielsweise eines Karosserieblechs 30, eingeführt worden.

Das Karosserieblech 30 liegt dabei auf der Anschlagplatte 14 (nicht abgebildet) auf. Der Abstand zwischen der Anschlagplatte und dem Ende der Rastnase 26 ist dabei auf die Dicke des Karosserieblechs 30 abgestimmt, so dass ein fester Sitz des Karosserieblechs nach Einrasten der Rastflügel 2 über die Fläche der Auslassung 28 hinaus und mit der partiellen Überlappung der Rastflügel 2 mit dem die Auslassung 28 umgebenden Karosserieblech gelingt. Wie in Figur 3 zu erkennen, sind die Zentrierrippen 4 in der Weise gestaltet, dass ihre radiale Ausdehnung abgestimmt ist auf den Durchmesser der Auslassung 28. Indem sich die Zentrierrippen 4 in Richtung des Einführendes 12 verjüngen, gelingt eine besonders sichere Einführung des Befestigungsmittels 1 in die Auslassung 28.

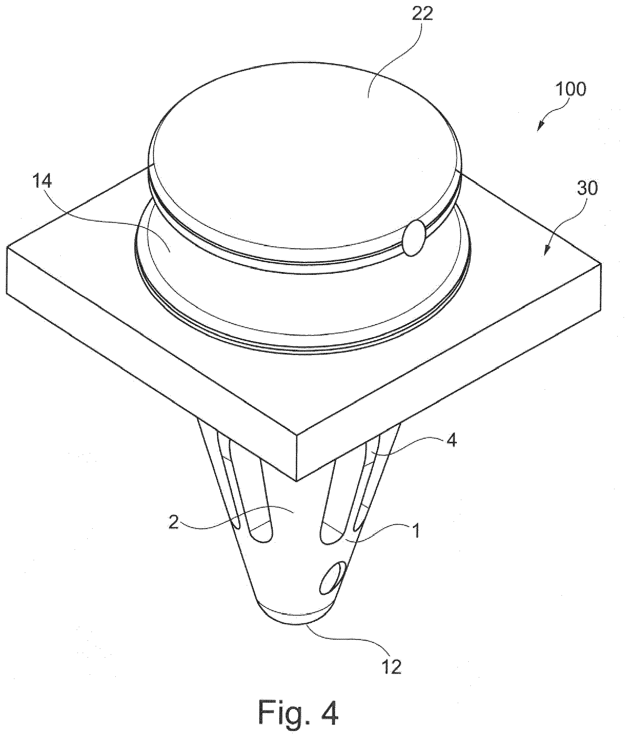

Figur 4 zeigt das Befestigungssystem 100 gemäß Figur 3 um 180° gedreht. Die Anschlagsfläche 14 liegt an der Oberfläche des Karosserieblechs 30 an. Das Aufnahmeelement 22 kann nun dazu genutzt werden, um Bauteile daran zu befestigen.

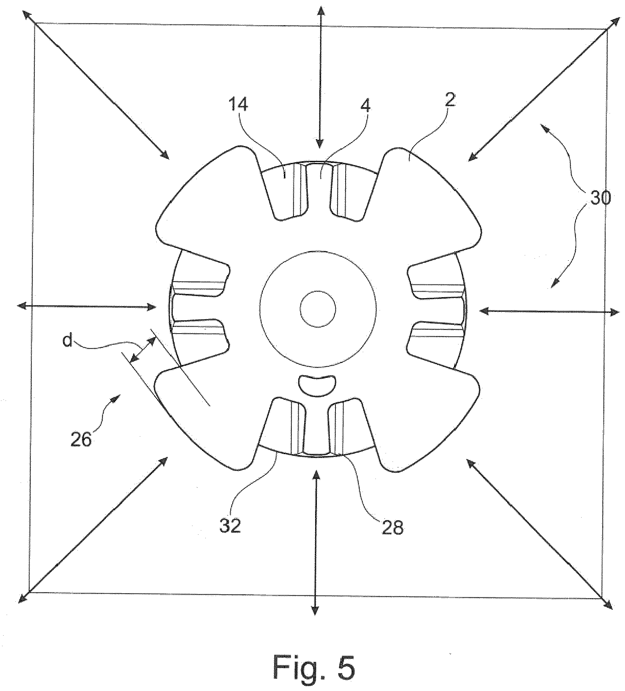

Figur 5 zeigt die Ausführungsform gemäß Figur 3 in orthogonaler Draufsicht. Man erkennt, dass die Rastnasen 26 der Rastflügel 2 in einem Abstand d über den Rand 32 der Auslassung 28 ausgrastet sind bzw. hinausragen und auf diese Weise Karosserieblech 30 und Befestigungsmittel 1 miteinander verbinden. Die Doppelpfeile zeigen an, dass durch die Wechselwirkung der Zentrierrippen 4 mit dem Rand 32 der Auslassung 30, die vorzugsweise passgenau aufeinander abgestimmt sind, sowie mit den Rastflügeln 2 eine Zentrierung sowie gleichzeitige Aufnahme der Verschiebekräfte in alle Richtungen gelingt. Des Weiteren wird durch den Abstand d das Ausmaß der Überdeckung des Rastflügels 2 über den Rand 32 der Auslassung 28 hinaus angedeutet.

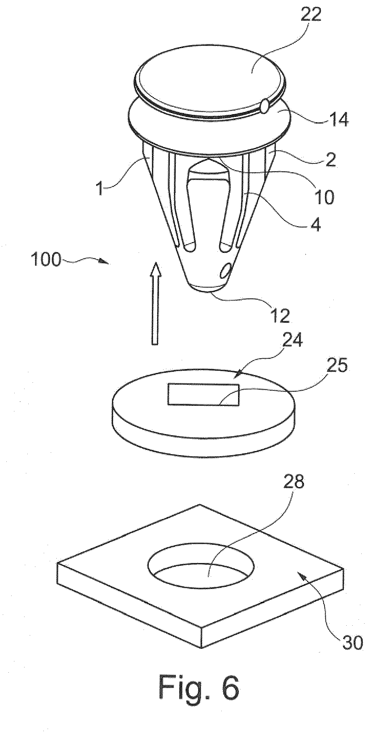

Die Figuren 6 bis 8 geben eine mögliche Montagereihenfolge einer bevorzugten Ausführungsform des erfindungsgemäßen Befestigungssystems 100 wieder. Zunächst werden das erfindungsgemäße Befestigungsmittel 1, umfassend das Anschlagelement bzw. die Anschlagplatte 14, das Aufnahmeelement 22, die Rastflügel 2, die Zentrierrippen 4 und das Kernelement 10 mit dem Einführende 12, in die Auslassung 25 der Dichtungsscheibe 24 eingeführt. Das Befestigungsmittel 1 liefert mit der Dichtungsscheibe 24 und dem Blech 30 ein erfindungsgemäßes Befestigungssystem 100. Es hat sich in einer Ausgestaltung als vorteilhaft erwiesen, die Auslassung 25 der Dichtungsschreibe 24 eckig, insbesondere quadratisch zu gestalten. Hierbei wird die Dimension der Auslassung 25 derart gewählt, dass die vier Zentrierrippen 4 bei vollständiger Einfügung in die Auslassung 25, d. h. bei Anschlag der Dichtungsscheibe 24 an die Anschlagplatte 14, sich jeweils passgenau in die Ecken der quadratischen Auslassung 25 einfügen.

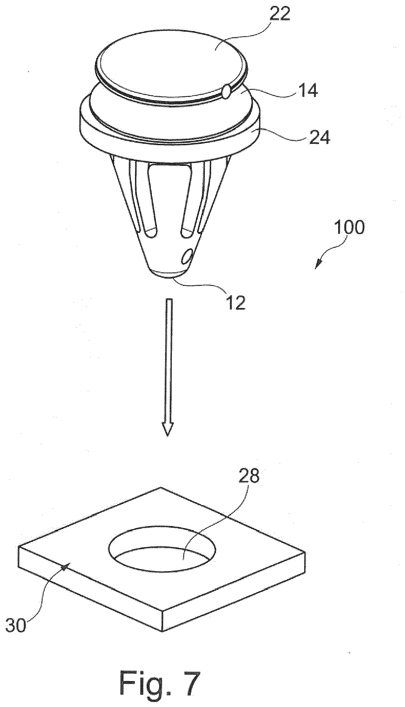

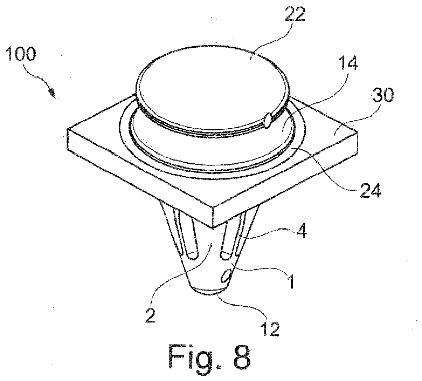

Wie Figur 7 zeigt, wird zunächst die Dichtungsscheibe 24 in der vorangehend geschilderten Ausrichtung mit dem Befestigungsmittel 1 verbunden. Der Abstand der Rastflügel 2 zu der Anschlagfläche der Anschlagplatte 14 wird dabei derart gewählt, dass das Blech 30 noch stets eine rastende Verbindung mit dem Befestigungsmittel 1 angehen kann. Aufgrund der Federelastizität der Dichtungsscheibe 24 wird der Abstand zwischen dem Ende des Rastflügels 3 und der Anschlagplatte 14 derart gewählt, dass dieser geringer ist als die Summe der Dicken von Dichtungsscheibe 24 und Blech 30. Im montierten, d. h. eingerasteten Zustand liegt das Befestigungssystem 100 in der in Figur 8 dargestellter Ausgestaltung vor.

Mit dem erfindungsgemäßen Befestigungsmittel und dem erfindungsgemäßen Befestigungssystem gelingt ein besonders sicheres, passgenaues und spielfreies Anbringen von mit dem Befestigungsmittel verbundenen Gegenständen an flächigen Bauteilen, beispielsweise an Karosserieblechen. Es hat sich überraschend gezeigt, dass bei Verwendung der erfindungsgemäßen Befestigungsmittel und der erfindungsgemäßen Befestigungssysteme ein Nachjustieren nach erfolgter Einrastung nicht mehr erforderlich ist, sondern dass stets eine optimale Positionierung schon mit der Einführung des Befestigungsmittels in die Auslassung eines flächigen Substrats unter Ausbildung eines erfindungsgemäßen Befestigungssystems gelingt.

Die in der vorstehenden Beschreibung, in den Ansprüchen sowie in den Zeichnungen offenbarten Merkmale der Erfindung können sowohl einzeln aus auch in jeder beliebigen Kombination für die Verwirklichung der Erfindung in ihren verschiedenen Ausführungsformen wesentlich sein.

## Patentansprüche

1. Befestigungsmittel, insbesondere Kunststoffclip, zur rastenden Befestigung in einer Auslassung, insbesondere einem Stanzloch, umfassend
ein Anschlagelement, insbesondere eine Anschlagplatte, und
ein Einführ- und Zentrierelement umfassend
ein Kernelement mit einem Einführende, das dem Anschlagelement gegenüberliegt,
wobei das Kernelement dem Einführende gegenüberliegend mit dem Anschlagelement verbunden ist oder einstückig in dieses übergeht,
mindestens drei Rastelemente, insbesondere Rastflügel, die zumindest abschnittsweise an dem Kernelement vorliegen und die sich zumindest abschnittsweise vom Kernelement weg erstrecken und die beabstandet von dem Anschlagelement enden, und mindestens drei Zentrierelemente, die eine maximale radiale Ausdehnung haben, die geringer ist als die maximale radiale Ausdehnung der Rastelemente.

2. Befestigungsmittel nach Anspruch 1, **dadurch gekennzeichnet, dass**
das Einführ- und Zentrierelement vier Rastelemente, insbesondere Rastflügel, aufweist, die sich von dem Kernelement weg erstrecken und wobei vorzugsweise der Winkel zwischen benachbarten Rastelementen, insbesondere Rastflügeln, etwa 90° beträgt.

3. Befestigungsmittel nach Anspruch 1 oder 2, **dadurch gekennzeichnet, dass**
das Einführ- und Zentrierelement vier Zentrierelemente aufweist, die sich von dem Kernelement weg erstrecken und wobei vorzugsweise der Winkel zwischen benachbarten Zentrierelementen etwa 90° beträgt.

4. Befestigungsmittel nach einem der vorangehenden Ansprüche, **dadurch gekennzeichnet, dass**
dieses vollständig oder teilweise aus einem Kunststoffmaterial gefertigt ist, insbesondere Polyoxymethylen (POM), Polyetherketone (PEK), Polyetheretherketone (PEEK), Polyamide und/oder Polyketone umfasst.

5. Befestigungsmittel nach einem der vorangehenden Ansprüche, **dadurch gekennzeichnet, dass**
die Zentrierelemente und die Rastelemente in alternierender Abfolge an dem Kernelement angeordnet sind und/oder dass
die maximale radiale Ausdehnung der Zentrierelemente von dem Kernelement, insbesondere dem Zentrum des Kernelements, beabstandet von dem Anschlagelement, insbesondere der Anschlagplatte, vorliegt.

6. Befestigungsmittel nach einem der vorangehenden Ansprüche, **dadurch gekennzeichnet, dass**
in einem ersten Abstand von dem Einführende die radiale Ausdehnung der Zentrierelemente größer als die radiale Ausdehnung der Rastelemente und dass in einem zweiten Abstand vom Einführende, der größer ist als der erste Abstand, die radiale Ausdehnung der Rastelemente größer ist als die radiale Ausdehnung der Zentrierelemente.

7. Befestigungsmittel nach einem der vorangehenden Ansprüche, ferner umfassend ein Aufnahmeelement für Bauteile oder Bauteilkomponenten mit einer Grundfläche, befestigt an oder einstückig ausgeführt mit dem Anschlagelement, das auf der Seite des Anschlagelements vorliegt, die dem Kernelements gegenüberliegt.

8. Befestigungsmittel nach einem der vorangehenden Ansprüche, **dadurch gekennzeichnet, dass**
das Aufnahmeelement über ein, insbesondere im Zentrum von Aufnahmeelement und/oder Anschlagelement angeordnetes, Verbindungselement mit dem Anschlagelement verbunden ist.

9. Befestigungsmittel nach einem der vorangehenden Ansprüche, **dadurch gekennzeichnet, dass**
die Rastelemente in der Weise beabstandet von dem Anschlagelement enden, dass zwischen den Rastelementen und dem Anschlagelement mindestens ein Dichtungselement, insbesondere eine Dichtungsscheibe, und/oder mindestens ein flächiges Substrat, insbesondere eine Blechplatte, anordenbar sind.

10. Befestigungsmittel nach einem der vorangehenden Ansprüche, **dadurch gekennzeichnet, dass**
dieses eingerichtet und ausgelegt ist, um eine rastende Befestigung mit einer eckigen, insbesondere quadratischen, oder mit einer im Wesentlichen kreisrunden Auslassung einzugehen.

11. Befestigungsmittel nach einem der vorangehenden Ansprüche, **dadurch gekennzeichnet, dass**
die Rastelemente federelastisch ausgestaltet sind und/oder in einem Abschnitt benachbart zum Anschlagelement nicht mit dem Kernelement verbunden, insbesondere von diesem beabstandet, sind.

12. Befestigungssystem, enthaltend
ein Befestigungsmittel nach einem der vorangehenden Ansprüche und mindestens
eine Dichtungsscheibe mit einer Auslassung, eingerichtet und ausgelegt, um das Einführ- und Zentrierelement aufzunehmen, und/oder mindestens ein flächiges Substrat, insbesondere Blechplatte, mit einer Auslassung, eingerichtet und ausgelegt, um das Einführ- und Zentrierelement aufzunehmen.

13. Befestigungssystem nach Anspruch 12, **dadurch gekennzeichnet, dass**
die mindestens eine Dichtungsscheibe zwischen dem Anschlagelement und dem mindestens einen flächigen Substrat angeordnet ist.

14. Befestigungssystem nach einem der Ansprüche 12 oder 13, **dadurch gekennzeichnet, dass**
die Zentrierelemente des Befestigungsmittels, insbesondere in dem Abschnitt benachbart zu dem Anschlagelement, eine Ausdehnung aufweisen, die im Wesentlichen der Ausdehnung der Auslassung des flächigen Substrats entspricht oder in einer Weise kleiner ist als die Ausdehnung der Auslassung des flächigen Substrats, dass das Einführ- und Zentrierelement lateral im Wesentlichen bewegungsinvariant vorliegt, und/oder dass
die Außenflächen der Zentrierelemente im Wesentlichen auf einem Kreisumfang angeordnet sind, dessen Durchmesser im Wesentlichen dem Durchmesser der kreisförmigen Auslassung des flächigen Substrats entspricht oder der in einer Weise kleiner ist als der Durchmesser der kreisförmigen Auslassung des flächigen Substrats, dass das Einführ- und Zetttrierelement lateral im Wesentlichen bewegungsinvariant vorliegt.

15. Befestigungssystem nach einem der Ansprüche 12 bis 14, **dadurch gekennzeichnet, dass**
das flächige Substrat ein Karosserieblech oder ein Bestandteil hiervon ist und/oder dass das Aufnahmeelement für Bauteile oder Bauteilkomponenten ein Aufnahmeelement für Leuchten, insbesondere Fahrzeugleuchten, oder Kabelsätze ist.
